**Europäisches Patentamt**

**European Patent Office**

**Office européen des brevets**

(19)

(11) Veröffentlichungsnummer: **0 253 197**
A2

(12) **EUROPÄISCHE PATENTANMELDUNG**

(21) Anmeldenummer: **87109370.4**

(22) Anmeldetag: **30.06.87**

(51) Int. Cl.⁴: **B 23 Q 7/04,** B 23 Q 3/155

(30) Priorität: **12.07.86 DE 3623586**

(43) Veröffentlichungstag der Anmeldung: **20.01.88**
Patentblatt 88/3

(84) Benannte Vertragsstaaten: **AT CH DE FR GB IT LI SE**

(71) Anmelder: **Gebr. Heller Maschinenfabrik GmbH,
Postfach 1428 Neuffener Strasse 54, D-7440 Nürtingen
(DE)**

(72) Erfinder: **Die Erfinder haben auf ihre Nennung verzichtet**

(74) Vertreter: **Jackisch, Walter, Dipl.-Ing., Menzelstrasse 40,
D-7000 Stuttgart 1 (DE)**

(54) Greifvorrichtung.

(57) Die Greifvorrichtung hat zwei Greifarme (4, 5), die um eine gemeinsame Achse (12) unmittelbar schwenkbar miteinander verbunden sind. Der Schwenkachse (12) ist ein Anschlag (37) zugeordnet. Beide Greifarme (4, 5) sind über Kniehebel (24, 25) an eine Kolbenstange (26) einer Kolben-Zylinder-Einheit (29) angelenkt. Die Kolbenstange (26) ist relativ zur Schwenkachse (12) verschiebbar. Mit der Kolbenstange (26) lassen sich die Greifarme (4, 5) in einer einzigen Verschiebebewegung ausfahren und in ihre Greifstellung verschwenken (Fig. 1).

EP 0 253 197 A2

Patentanwalt
Dipl.-Ing. W. Jackisch
Menzelstr. 40, 7000 Stuttgart 1

_-1 -_

4                                    **0 253 197**

Gebr. Heller Maschinenfabrik
Gesellschaft mit beschränkter
Haftung
Neuffener Str. 54

7440 Nürtingen

## Beschreibung

## Greifvorrichtung

Die Erfindung betrifft eine Greifvorrichtung nach dem
Oberbegriff des Anspruches 1.

Bei dieser bekannten Greifvorrichtung (DE-OS 26 47 945)
werden die Greifarme über jeweils zwei Kniehebel mit einem
Keilblock gelenkig verbunden, der einen Teil des Antriebes
der Greifarme bildet. Der Keilblock selbst wird über zwei
Hebel verschoben, die ihrerseits mit jeweils einem
verschiebbaren Bolzen zusammenwirken. Diese
Greifvorrichtung hat einen sehr komplizierten Aufbau und
ist infolge der Vielzahl von Teilen auch störanfällig. Die
Montage dieser Greifvorrichtung ist aufwendig und
kostspielig.

Bei einer anderen bekannten Greifvorrichtung (DE-PS
33 43 765) sind für die Greifarme im Gehäuse bogenförmige
Führungsbahnen vorgesehen, in denen die Greifarme geführt
werden. Sie sind mit Kulissensteinen versehen, die in eine
senkrecht zur Verschieberichtung der Greifarme verlaufende
Nut 33 eines Schiebers 30 eingreifen. Mit ihm werden die
Greifarme in die Ruhe- bzw. in die Greifstellung
verschoben. Die bogenförmigen Führungsbahnen und die ihnen
folgenden Greifarme erfordern eine paßgenaue Fertigung, da andernfalls die Greifarme in den nutenförmigen Führungen
verklemmen. Diese Greifvorrichtung ist dadurch störanfällig
im Betrieb.

Der Erfindung liegt die Aufgabe zugrunde, die gattungsgemäße Greifvorrichtung so auszubilden, daß sie nur aus
wenigen Bauteilen besteht und die Greifarme ohne Einhaltung besonders enger Fertigungstoleranzen störungsfrei
zwischen der Ruhe- und der Greifstellung hin und herbewegt werden können.

Diese Aufgabe wird bei der gattungsgemäßen Greifvorrichtung
erfindungsgemäß mit den kennzeichnenden Merkmalen des Anspruches 1 gelöst.

Um die Greifarme aus ihrer Ruhestellung in die Greifstellung
zu bewegen, wird die Kolbenstange ausgefahren. Über die Kniehebel werden hierbei die beiden Greifarme mitgenommen und
im Gehäuse verschoben. Diese Verschiebebewegung mittels der
Kolbenstange läßt sich mühelos durchführen. Sobald die den
beiden Greifarmen gemeinsame Schwenkachse mit dem Anschlag
zusammenwirkt, können die Greifarme nicht weiter verschoben
werden. Die Kolbenstange kann jedoch relativ zu dieser
Schwenkachse weiter verschoben werden. Die Folge hiervon ist,
daß die Greifarme um die Schwenkachse zum Ergreifen des
Werkzeuges oder des Werkstückes in die Greifstellung geschwenkt
werden, wie an sich aus der US-PS 37 29 102 bekannt ist.
Mit der Kolbenstange lassen sich somit die Greifarme in
einer einzigen Verschiebebewegung aus dem Gehäuse ausfahren
und in ihre Greifstellung verschwenken. In der Greifstellung werden die Greifarme über die Kolbenstange verriegelt,
so daß sie das Werkzeug oder Werstück zuverlässig fest greifen.

Weitere Merkmale der Erfindung ergeben sich aus den weiteren
Ansprüchen, der Beschreibung und den Zeichnungen.

Die Erfindung wird anhand eines in den Zeichnungen dargestellten Ausführungsbeispieles näher erläutert. Es zeigen

Fig. 1      eine erfindungsgemäße Greifvorrichtung, deren Greifarme sich in Ruhestellung befinden, in der sie vollständig in ein Gehäuse der Greifvorrichtung zurückgezogen sind,

Fig. 2      die Greifvorrichtung gemäß Fig. 1, bei der sich die Greifarme kurz vor ihrer Greifstellung befinden,

Fig. 3      die Greifvorrichtung, deren Greifarme sich in Greifstellung befinden,

Fig. 4      in schematischer Darstellung die Greifvorrichtung in Seitenansicht.

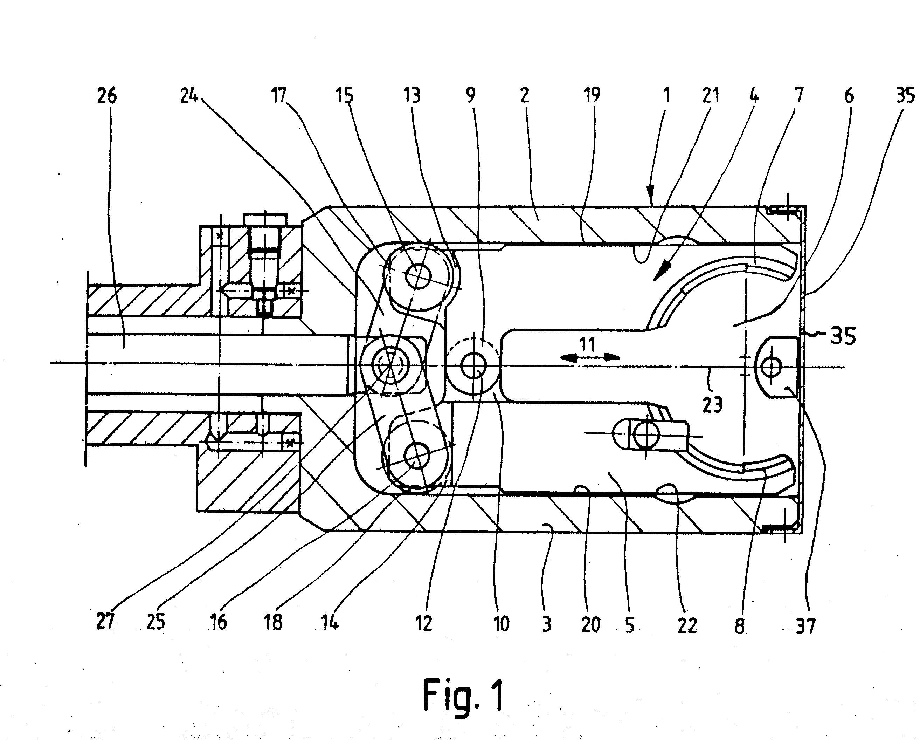

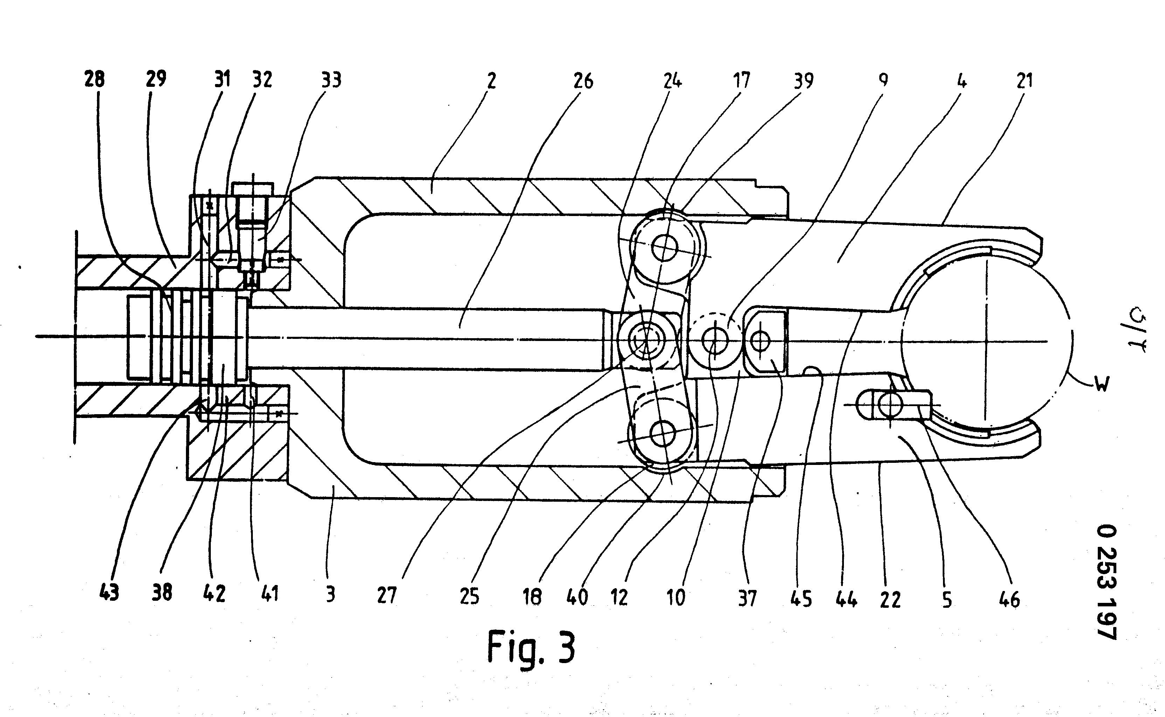

Mit der Greifvorrichtung werden Werkzeuge und/oder Werkstücke erfaßt. Die Greifvorrichtung hat ein im Querschnitt im wesentlichen rechteckförmiges Gehäuse 1 mit parallel zueinander liegenden Seitenwänden 2 und 3, an denen Greifarme 4 und 5 beim Verstellen aus der Ruhestellung (Fig. 1) in die Greifstellung (Fig. 3) und umgekehrt geführt werden. Die Dicke der Greifarme 4, 5 entspricht der Innenhöhe des Gehäuses 1, so daß die Greifarme mit geringem Spiel zu den einander gegenüberliegenden Böden 6 im Gehäuse verschiebbar sind. Die Greifarme 4, 5 sind mit ebenen Außenseiten versehen.

Die Greifarme sind an ihrem dem Greifende 7, 8 gegenüberliegenden Ende mit zwei gegeneinander gerichteten Laschen 9 und 10 versehen, die von einem senkrecht zur Verschieberichtung 11 liegenden Bolzen 12 durchsetzt sind. Er bildet die gemeinsame Schwenkachse für die beiden Greifarme 4, 5. Sie sind außerdem mit jeweils einer in Verschieberichtung 11 vorstehenden weiteren Lasche 13 und 14 versehen, die benachbart zu den Gehäuseseitenwänden 2, 3 liegen. Die Laschen 13, 14 werden jeweils von einer Achse 15 und 16 durchsetzt, die parallel zum Bolzen 12 liegt und auf der jeweils mindestens eine Laufrolle 17 und 18 frei drehbar gelagert ist. Beim Verschieben der Greifarme 4, 5 rollen die Laufrollen 17, 18 an den Innenseiten 19 und 20 der Gehäuseseitenwände 2, 3 ab. Um die Reibung zwischen den Greifarmen 4, 5 und den Gehäuseseitenwänden 2, 3 so klein wie möglich zu halten, liegen die Greifarme ausschließlich mit den Laufrollen 13, 14 an den Gehäuseseitenwänden an, während ihre parallel zur Gehäuseseitenwand verlaufenden, voneinander abgewandten ebenen Außenseiten 21, 22 geringen Abstand von den Innenseiten 19, 20 haben. Durch die rollende Reibung lassen sich die Greifarme somit mühelos und klemmungsfrei verschieben.

Die Achsen 15, 16 liegen mit Abstand zu einer Längssymmetrieebene 23 der Greifvorrichtung. Die Achse des Bolzens 12 liegt in der Längssymmetrieebene 23.

Über die Achsen 15, 16 sind zwei Kniehebel 24 und 25 an die Greifarme 4, 5 angelenkt. Außerdem sind die Kniehebel 24, 25 an das freie Ende einer Kolbenstange 26 angelenkt, deren Achse in der Längssymmetrieebene 23 liegt. Von ihrer Anlenkstelle 27 an der Kolbenstange 26 aus verlaufen die Kniehebel 24, 25 unter einem stumpfen Winkel zueinander divergierend. Die Anlenkstelle 27 liegt ebenso wie die Achse des Bolzens 12 in der Längssymmetrieebene 23.

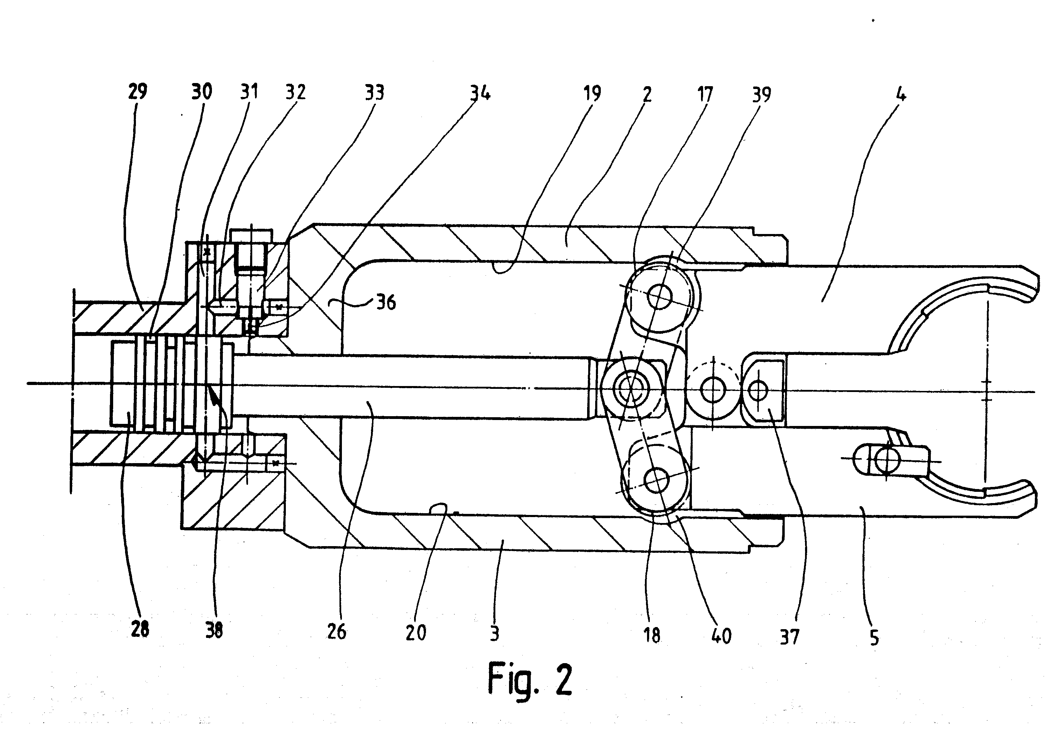

Die Kolbenstange 26 trägt einen Steuerkolben 28 (Fig. 2)
der in einem an das Gehäuse 1 angesetzten Zylinder 29
verschiebbar ist. In den Zylinderraum 30 mündet eine
Bohrung 31, die über eine Querbohrung 32 mit einem Auslaß
33 verbunden ist. Er ist außerdem über eine Drosselstelle
34 mit dem Zylinderraum 30 leitungsverbunden.

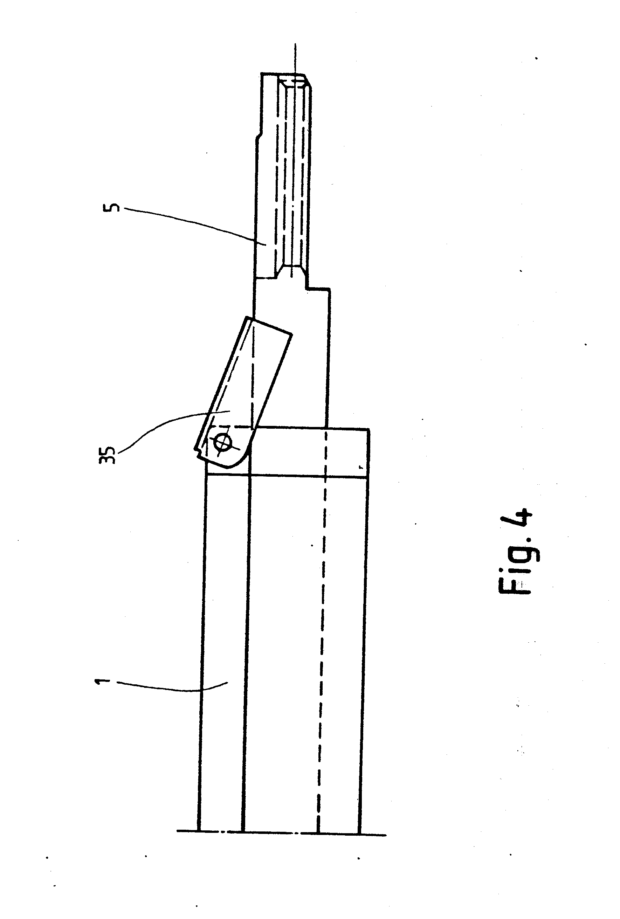

In der Ausgangsstellung befinden sich die Greifarme 4, 5 in
der in Fig. 1 dargestellten Ruhestellung, in der sie
vollständig innerhalb des Gehäuses liegen und nicht über
dessen Stirnseite ragen. An ihr befindet sich eine unter
Federkraft stehende Verschlußklappe 35 (Fig. 1 und 4),
welche die Stirnseite des Gehäuses 1 in der Ruhestellung
der Greifarme 4, 5 (Fig. 1) vollständig abschließt. Zum
Ausfahren der Greifarme 4, 5 wird der Steuerkolben 28
beaufschlagt, so daß die Kolbenstange 26 ausgefahren wird.
Sie durchsetzt eine Rückwand 36 des Gehäuses 1, an der der
Zylinder 29 befestigt ist. Das auf der Kolbenstangenseite
des Zylinderraumes 30 befindliche Druckmedium wird beim
Ausfahren der Kolbenstange 26 durch die Bohrung 31 und die
Querbohrung 32 in den Auslaß 33 verdrängt. Beim Verschieben
rollen die Laufrollen 17, 18 an der Innenseite 19, 20 der
Gehäuseseitenwände 2, 3 ab. Die Verschlußklappe 35 wird
beim Verschieben durch die Greifarme 4, 5 gegen Federkraft
selbsttätig in ihre Offenstellung (Fig. 4) verschwenkt. Zur
Begrenzung des Verschiebeweges der Kolbenstange 26 bzw. der
Greifarme 4, 5 ist auf dem Boden 6 des Gehäuses 1 ein
Anschlag 37 vorgesehen, gegen den die Laschen 9, 10 der
Greifarme 4, 5 auflaufen. Kurz bevor diese Anschlagstellung
erreicht ist, überfährt eine Steuerkante 38 des
Steuerkolbens 28 die Bohrung 31 und verschließt sie.
Dadurch kann das vor dem Steuerkolben 28 befindliche
Druckmedium nicht mehr über die Bohrung 31, sondern nur
noch über die Drosselstelle 34 verdrängt werden. Dadurch
wird aber die Ausfahrgeschwindigkeit der Kolbenstange 26
selbsttätig verringert, so daß die Laschen 9, 10 langsam an den Anschlag 37 fahren (Fig. 2). In dieser Anschlagstellung
liegen die Laufrollen 17, 18 einer teilkreisförmigen
Vertiefung 39, 40 in den Innenseiten 19, 20 der
Gehäuseseitenwände 2, 3 gegenüber. Sobald die
Anschlagstellung gemäß Fig. 2 erreicht ist, gibt die
Steuerkante 38 des Steuerkolbens 28 die Bohrung 31 wieder
frei (Fig. 3), so daß das Druckmedium wieder über die
Bohrung 31 und die Querbohrung 32 zum Auslaß 33 verdrängt
werden kann. Die Kolbenstange 26 wird dann wieder
beschleunigt in ihre Endstellung ausgefahren (Fig. 3). Das
Druckmedium kann in dieser Phase aus dem Bereich vor der
Steuerkante 38 des Steuerkolbens 28 über eine Bohrung 41,
eine daran anschließende Querbohrung 42 und eine daran
anschließende weitere Bohrung 43 im Zylinder 29 zur Bohrung
31 gelangen. Da während dieser letzten Verschiebephase die
Laschen 9, 10 der Greifarme 4, 5 am Anschlag 37 anliegen,
werden die Kniehebel 24, 25 beim weiteren Ausfahren der
Kolbenstange 26 relativ zueinander verschwenkt, wobei die
Anlenkstelle 27, die durch einen Bolzen gebildet sein kann,
in Richtung auf die Laschen 9, 10 verschoben wird. Dadurch
werden die Greifarme 4, 5 in Richtung zueinander um den
Bolzen 12 verschwenkt, wobei die Laufrollen 17, 18 in die
Vertiefungen 39, 40 der Gehäuseseitenwände 2, 3 eintauchen.
Um die Schwenkbewegung der Greifarme 4, 5 zu ermöglichen,
sind ihre Außenseiten 21, 22 im Bereich der Vertiefungen
39, 40 zurückgesetzt (Fig. 3).Der Schwenkvorgang der
Greifarme 4, 5 wird dann beendet, wenn entweder die
Greifarme am Werkstück W oder Werkzeug zur Anlage kommen
oder bei Leerspannung die Laufrollen 17, 18 am Boden der
Vertiefungen 39, 40 anschlagen. Alternativ kann bei
Leerspannung das Schwenkende der Greifarme 4, 5 durch
Begrenzung des Kolbenweges erreicht werden. Die einander
zugewandten Innenseiten 44, 45 der Greifarme 4, 5 haben
Abstand vom Anschlag 37, um die Schwenkbewegung der
Greifarme nicht zu behindern. In der Greifstellung gemäß
Fig. 3 umgreifen die Arme 4, 5 das entsprechende Werkstück
bzw. Werkzeug.

Zum Freigeben des Werkzeuges und/oder des Werkstückes wird die Kolbenstange 26 durch entsprechende Beaufschlagung des Kolbens 28 zurückgefahren. Die Kniehebel 24, 25 werden hierbei wieder in Richtung zueinander verschwenkt, weil die Laufrollen 17, 18 beim Zurückfahren aus den Vertiefungen 39, 40 heraustreten. Die Greifarme 4, 5 werden dabei um den Bolzen 12 in ihre Lage gemäß Fig. 2 geschwenkt. Anschließend werden die Greifarme 4, 5 durch Zurückfahren der Kolbenstange 26 in die Ruhestellung nach Fig. 1 in das Gehäuse 1 geschoben. Die Abdeckklappe 35, die während des Verschiebens unter Federkraft auf den Greifarmen aufliegt, schließt beim Zurückziehen der Greifarme in das Gehäuse 1 selbsttätig deren offene Stirnseite, so daß das Gehäuseinnere und die Greifarme vor Verschmutzung und/oder Beschädigung geschützt sind.

Um die Greifarme 4, 5 aus dem Gehäuse 1 auszufahren und in ihre Greifstellung zu bringen, muß lediglich die Kolbenstange 26 ausgefahren werden. Sie muß darum nur eine einzige Bewegung ausführen, um die Greifarme auszufahren und zu verschwenken. Da die Greifarme 4, 5 im wesentlichen parallel zueinander aus dem Gehäuse ausgefahren werden und dann in Richtung zueinander verschwenkt werden, kann der Abstand zwischen den zu ergreifenden Werkzeugen und/oder Werkstücken sehr klein sein, ohne daß dadurch das sichere Ergreifen beeinträchtigt wird. In der Greifstellung sind die Greifarme 4, 5 durch die Kolbenstange-Kniehebel-Verbindung selbsthemmend verriegelt, so daß die ergriffenen Werkzeuge bzw. Werkstücke sicher gehalten werden.

Der Greifarm 5 ist gegebenenfalls noch mit einer Verdrehsicherung 46 versehen, die in eine entsprechende Kerbe des zu greifenden Werkzeuges eingreift und dieses dadurch gegen Verdrehen sichert. Die beschriebene

- 8 -

Greifvorrichtung zeichnet sich durch einen konstruktiv sehr einfachen Aufbau aus, da nur wenige Bauteile notwendig sind. Die Greifvorrichtung ist darum im Betrieb wenig störanfällig und gewährleistet darum eine lange Betriebsdauer. Infolge ihrer kompakten Ausbildung benötigt die Greifvorrichtung auch nur wenig Platz.

Patentanwalt
Dipl.-Ing. **W. Jackisch**
Menzelstr. 40, 7000 Stuttgart 1

Gebr. Heller Maschinenfabrik
Gesellschaft mit beschränkter
Haftung
Neuffener Str. 54

7440 Nürtingen

**0 253 197**

A 1-87 337/sch

26.06.1987

## Ansprüche

1. Greifvorrichtung mit einem Gehäuse, in dem zwei Greifarme untergebracht sind, die aus einer Ruhestellung, in der sie im Gehäuse liegen, in eine Greifstellung und umgekehrt verstellbar sind, in der sie aus dem Gehäuse ragen, und mit einem Antrieb zum Verstellen der Greifarme, die über Kniehebel mit dem Antrieb gelenkig verbunden sind, dadurch gekennzeichnet, daß die Greifarme (4, 5) um eine gemeinsame Achse (12) unmittelbar schwenkbar miteinander verbunden sind, der ein Anschlag (37) zugeordnet ist, daß beide Greifarme (4, 5) über die Kniehebel (24, 25) an eine Kolbenstange (26) einer Kolben-Zylinder-Einheit (29) angelenkt sind, und daß die Kolbenstange (26) relativ zur Schwenkachse (12) verschiebbar ist.

2. Greifvorrichtung nach Anspruch 1, dadurch gekennzeichnet, daß die Greifarme (4, 5) gegeneinander gerichtete Laschen (9, 10) haben, die durch einen die gemeinsame Schwenkachse (12) bildenden Bolzen gelenkig miteinander verbunden sind.

3. Greifvorrichtung nach Anspruch 1 oder 2, dadurch gekennzeichnet, daß die Kniehebel (24, 25) an weiteren Laschen (13, 14) der Greifarme (4, 5) angelenkt sind, und daß die Laschen (13, 14) quer zur Verschieberichtung (11) der Greifarme (4, 5) Abstand von der Schwenkachse (12) haben.

4. Greifvorrichtung nach einem der Ansprüche 1 bis 3, dadurch gekennzeichnet, daß Anschläge zur Begrenzung des maximalen Verschiebeweges der Kolbenstange (26) vorgesehen sind.

5. Greifvorrichtung nach einem der Ansprüche 1 bis 4, dadurch gekennzeichnet, daß die Greifarme (4, 5) unter rollender Reibung an den Gehäuseseitenwänden (2, 3) geführt sind.

6. Greifvorrichtung nach Anspruch 5, dadurch gekennzeichnet, daß jeder Greifarm (4, 5) mindestens einen Wälzkörper (17, 18), vorzugsweise Laufrollen, aufweist, die an den Gehäuseseitenwänden (2, 3) abrollen.

7. Greifvorrichtung nach Anspruch 6, dadurch gekennzeichnet, daß die Wälzkörper (17, 18) auf den mit den Kniehebeln (24, 25) verbundenen Laschen (13, 14) der Greifarme (4, 5) frei drehbar gelagert sind.

8. Greifvorrichtung nach Anspruch 6 oder 7, dadurch gekennzeichnet, daß die Wälzkörper (17, 18) beim Verschieben der Greifarme (4, 5) aus der Ruhe- in die Greifstellung unter der von der Kolbenstange (26) über die Kniehebel (24, 25) ausgeübten Kraft an den Gehäuseseitenwänden (2, 3) anliegen.

9. Greifvorrichtung nach einem der Ansprüche 6 bis 8, dadurch gekennzeichnet, daß die Wälzkörper (17, 18) beim Verschwenken der Greifarme (4, 5) in der Greifstellung in Vertiefungen (39, 40) der Gehäuseseitenwände (2, 3) gelangen.

10. Greifvorrichtung nach einem der Ansprüche 1 bis 9,
    dadurch gekennzeichnet, daß die Kolbenstange (26) einen
    Steuerkolben (28) trägt, der mit einer Steuerkante (38)
    zum Umsteuern von Schnell- auf Langsamgang der
    Kolbenstange (26) versehen ist.

11. Greifvorrichtung nach Anspruch 10, dadurch
    gekennzeichnet, daß in den Zylinderraum (30) der
    Kolben-Zylinder-Einheit (29) mindestens eine
    Auslaßbohrung (31) und eine Drossel (34) münden, und
    daß die Steuerkante (38) des Steuerkolbens (28) kurz
    vor Erreichen der Anschlagstellung der Schwenkachse
    (12) die Auslaßbohrung (31) verschließt.

12. Greifvorrichtung nach Anspruch 10 oder 11, dadurch
    gekennzeichnet, daß die Steuerkante (38) nach Erreichen
    der Anschlagstellung die Auslaßbohrung (31) wieder
    freigibt.

Fig. 1

Menzelstr. 40, 7000 Stuttgart 1

0 253 197

Fig. 2

Fig. 3

Fig. 4

0 253 197